# EUROPEAN PATENT APPLICATION

(11) **EP 0 700 635 A1**
(43) Date of publication of application: **13.03.1996**
(21) Application number: 95113997.1
(22) Date of filing: 06.09.1995
(51) Int. Cl.: A01K 87/00

(54) **Intra-line type lure rod**

(30) Priority: 06.09.1994 JP 238528/94; 07.09.1994 JP 239560/94; 21.09.1994 JP 253075/94
(71) Applicant: DAIWA SEIKO INC., Higashikurume-shi, Tokyo (JP)
(72) Inventor: Akiba, Masaru, Tokorozawa-shi, Saitama (JP); Saraya, Kenji, Mitaka-shi, Tokyo (JP); Tsurufuji, Tomoyoshi, Sayama-shi, Saitama (JP)
(74) Representative: Grünecker, Kinkeldey, Stockmair & Schwanhäusser Anwaltssozietät

(57) **Abstract**

The invention concerns an intra-line type lure rod which not only can reduce the resistance of a fishline as much as possible when it is played out but also is sturdy though a fishline introduction guide is provided. The intra-line type lure rod includes a rod pipe which has a small diameter portion (16), a large diameter portion (12) having a reel mounting portion (42R), and a taper portion (14) formed and connected integral with the large diameter portion (16) while the front portion of the taper portion (14) is connected to the small diameter portion (16). A handle portion (10) is connected to the backwardly extended portion of the rod pipe, and an inclined fishline introduction guide (26) is provided in the portion of the large diameter portion (12) located forwardly of the reel mounting portion (42R) or in the portion of the taper portion (14) to the large diameter portion (12).

## Description

### BACKGROUND OF THE INVENTION

The present invention relates to a lure rod of an intra-line type. The term "a lure rod" includes casting rod which can be operated by one hand and a spinning rod which uses a spinning reel.

Since the lure rod is operated by one hand, generally, the greater part of the rod pipe thereof is formed rather thin to thereby provide a good flexing property. Also, due to the complicated and quick operation of the lure rod by one hand, various kinds of forces are given to not only the handle operation portion of the rod pipe but also to the areas of the rod pipe adjacent to the handle operation portion.

However, when structuring the lure rod as a lure rod of an intra-line type, at first, there is formed a hole in the rod pipe in order to provide a fishline introduction guide, whereas the strength of the rod pipe is lowered down to an insufficient level due to existence of the hole. As described above, not only the rod pipe of the lure rod is rather thin but also the lure rod is operated in various manners, with the result that the intra-line type lure rod provides a structure which cannot endure the operational forces caused by such complicated operation.

Also, since the lure rod is operated in a complicated manner when casting the lure rod, a fishline is caused to vibrate heavily in the lateral direction or the like. In particular, if the fishline introduction guide is provided in the thin rod pipe, then the fishline just coming out from the leading end portion of the fishline introduction guide is still vibrating and thus the fishline can touch the inner surface of the thin rod pipe, thereby increasing the resistance of the fishline.

A further problem arises when structuring the lure rod as the intra-line type. That is, Japanese Utility Model Kokai Publication No. Sho. 63-85073, discloses a structure for an intra-line type fishing rod, in which an introduction angle at which a fishline drawn out from reel is introduced into a rod tube is made smaller to thereby reduce the insertion resistance of the fishline and, further the reel is mounted on a support member (which serves also as a handle portion) disposed eccentric with respect to the axis of the rod pipe in order to play out or take up the fishline smoothly.

However, in view of the fact that the lure rod is a rod which can be operated freely by one hand as described above, if the above structure is employed in the lure rod, then the eccentric arrangement of the handle portion with respect to the axis of the rod pipe makes it unstable to operate the lure rod by one hand, thereby degrading the operationability of the lure rod which is the most important feature of the lure rod. Also, since a complicated force is applied to and around the handle portion while the lure rod is being operated, the structure of the lure rod must be made sturdy.

Moreover, in an intra-line type fishing rod, since a fishline is not connected to the leading end of the fishing rod, a strike or a hit of fish is hard to be transmitted to a rod pipe. In this case, the strike is transmitted with much more accuracy when an angler touches the fishline directly than when the angler touches the rod pipe and, therefore, during fishing, the angler sometimes pinches the fishline drawn out from the reel with fingers directly, or, applies fine movements to the fishline with his fingers.

However, when the angler waits for the strike with the fishline pinched with fingers, the angler normally supports the rod pipe while holding the rod pipe between other fingers. In this case, if the angler keeps on this attitude for a long time, then the fingers supporting the rod pipe ache.

Also, when pumping the intra-line type fishing rod, it is necessary to prevent the fishline drawn out from the reel from interfering with the pumping operation. In this case, if a fishline introduction portion is formed at hand, then the angler often holds the portion of the rod pipe situated adjacent to the fishline introduction portion. However, if the shape of the rod pipe remains as it is, then the fishing rod cannot be held stably and thus the rod holing sense is not good.

### SUMMARY OF THE INVENTION

Accordingly, it is an object of the invention to provide a lure rod which not only can reduce the fishline resistance in the fishline play-out operation much as possible but also is sturdy though it is formed as a lure rod of an intra-line type including a fishline introduction guide.

Another object of the invention is to provide a lure rod which not only decreases the introduction angle of the fishline to thereby reduce the insertion resistance of the fishline but also is sturdy and is excellent in operationability.

Further another object of the invention is to provide an intra-line type fishing rod which can be held by hand or with fingers in a good feeling and is excellent in operationability.

In attaining the above-noted and other objects, according to the invention, there is provided an intra-line type lure rod, in which a handle portion is connected to the backwardly extended portion of a rod pipe having such an inner surface as includes a small diameter portion, a large diameter portion having a reel mounting portion, and a taper portion formed and connected integral with the large diameter portion while the front portion thereof is connected to the small diameter portion, and there is provided fishline introduction guide in the portion of the large diameter portion located forwardly of the reel mounting portion or in the portion of the taper portion close to the large diameter portion.

In the lure rod which is operated through the handle portion thereof, the fishline played out from a reel mounted on the large diameter portion is introduced into the rod pipe from the fishline introduction guide located in the front portion of the lure rod. In the present lure rod, since the fishline introduction guide is provided in the large diameter portion or in the portion of the taper portion close to the large diameter portion, even after the fishline moves through the fishline introduction guide into the rod pipe, the fishline can pass through the portion of the rod pipe having a large inside diameter. Therefore, even if there are still left various vibrations such as a lateral vibration and the like on the fishline, the present structure prevents the fishline from touching the inner surface of the rod pipe, thereby being able to reduce the fishline resistance when the fishline is played out. In the present structure, it is preferable that the fishline introduction guide is provided in an inclined manner, since the fishline coming out of the reel can be introduced into the interior of the rod pipe substantially along the longitudinal direction of the rod pipe without being curved greatly, which can reduce the fishline resistance accordingly.

The invention further provides an intra-line type lure rod in which a handle portion is connected to an extended portion of a rod pipe, a cutaway portion is formed on one side of the side surface of the rod pipe, reinforcing means for reinforcing the strength of the rod pipe lowered due to existence of the cutaway portion is disposed such that it extends from the interior of the handle portion through the interior of the rod pipe to the cutaway portion, a reel placement portion is formed at a position of the reinforcing member opposed to the cutaway portion, and a fishline introduction portion is formed in front of the reel placement portion. The reinforcing means must not be always formed of a single member but a plurality of member may be united and fixed together by adhesives or the like to provide the reinforcing means.

Since the reel is mounted on the reel mounting portion formed at the position of the reinforcing means extending through the interior of the rod pipe that is opposed to the cutaway portion of the rod pipe, the reel sinks down on the axial side of the rod pipe, the angle at which the fishline is introduced is decreased, and the insertion resistance of the fishline is reduced. The strength of the rod pipe is lowered due to existence of the cutaway portion formed in the rod pipe. However, since the reinforcing means is disposed in the interior the rod pipe such that it extends from the interior of the handle portion to the cutaway portion, the initial strength of the rod pipe can be maintained. Also, because the handle portion is connected to the extended portion of the rod pipe, it is not shifted from axis of the rod pipe, so that the lure rod can be operated well while the angler is holding the handle portion.

The invention further provides an intra-line type fishing rod, in which, thickness portion is formed in the portion of a rod pipe situated between a reel placement portion and a fishline introduction portion formed forwardly of the reel placement portion, the thickness portion has a vertical thickness capable of being loosely held between fingers, and a flexible member is placed on the surface of the thickness portion.

According to the fishing rod,the thickness portion holdable between fingers is formed in the portion of the rod pipe situated between the reel placement portion and the fishline introduction portion, so that the angler is able to relax his or her fishing rod holding attitude, and the flexible member is disposed to thereby enhance the sense of the finger touch with the gripping portion of the fishing rod and thus improve the fishing rod in operationability.

Also, the invention further provides an intra-line type fishing rod, in which a flexible member or a slidproof member is placed on the peripheral surface of the portion of the rod pipe situated adjacent to the fishline introduction portion.

According to the fishing rod, since the flexible member or the skidproof member is disposed in the peripheral surface of the portion of the rod pipe situated adjacent to the fishline introduction portion to be held with fingers in the pumping operation, the fingers are prevented against skidding to thereby enhance the rod holding sense and thus improve the rod in operationability.

Further, the invention provides a fishing rod with an inserted fishline, in which the cross section of the portion of the rod pipe situated adjacent to the fishline introduction portion is formed as a non-circular shape long in the vertical direction thereof.

According to the fishing rod, in view of the fact that the periphery of the portion of the rod pipe situated adjacent to the fishline introduction portion is generally reinforced, the opposite side to the fishline introduction portion is similarly increased in thickness, thereby forming such rod pipe portion so as to have a non-circular section long in the vertical direction thereof as a whole. Due to this, not only the fishline introduction portion can be reinforced but also the thickened portion including the fishline introduction portion can be stored well in the palm of the hand to thereby stabilize the fishing rod when it is held by hand. Therefore, the rod holding sense can be enhanced and the fishing rod can be improved in operationability.

### BRIEF DESCRIPTION OF THE DRAWINGS

Fig. 1 is a side view of a lure rod of an intra-line type according to an embodiment of the invention.

Fig. 2 is a longitudinal section view of the main portions of the lure rod shown in Fig. 1.

Fig. 3 is a top plan view of the lure rod shown in Fig. 1.

Fig. 4 is a longitudinal section view of main portions of a lure rod of an intra-line type according to another embodiment of the invention.

Fig. 5 is a longitudinal section view of main portions of a lure rod of an intra-line type according to yet another embodiment of the invention.

Fig. 6 is a transverse section view taken along the arrow line 6-6 of Fig. 5.

Fig. 7 is a longitudinal section view of main portions of a lure rod of an intra-line type according to sill another embodiment of the invention.

### DETAILED DESCRIPTION OF THE PREPERRED EMBODIMENTS

Now, description will be given below in more detail of intra-line type lure rods according to preferred embodiments of the invention with reference to the accompanying drawings.

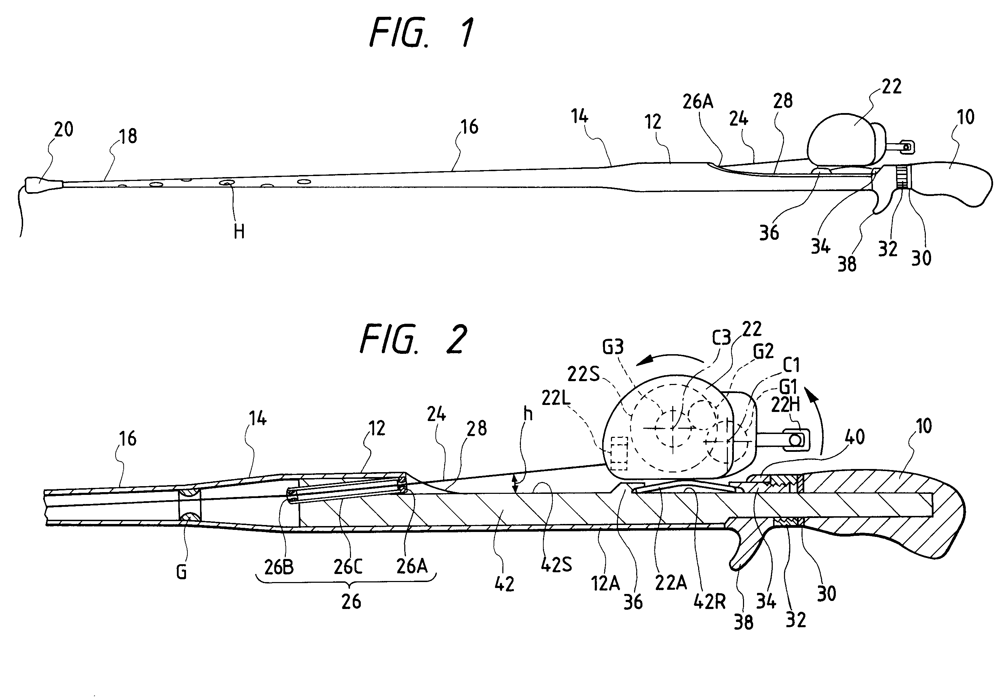

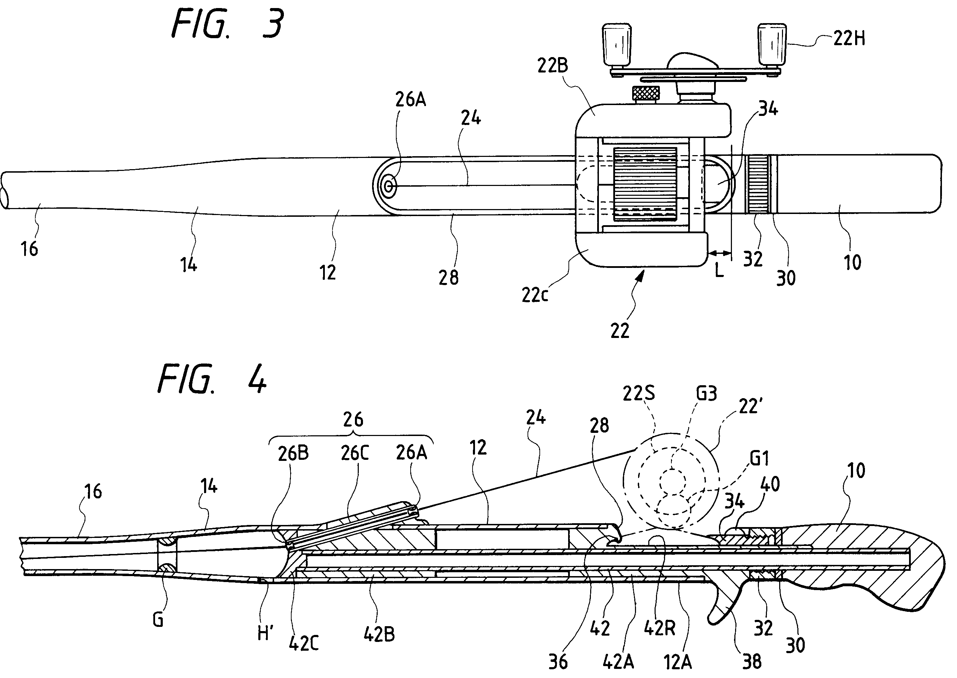

In particular, Fig. 1 is a side view of an embodiment of a casting rod according to the invention, Fig. 2 is a longitudinal section view of the present casting rod, and Fig. 3 is a plan view of the present casting rod. The rod pipe of the casting rod uses synthetic resin as a matrix and is reinforced with reinforcing fibers. The rod pipe includes a large diameter portion 12, a steep taper portion 14, a gentle taper portion 16 serving as a small diameter portion, and a rod top portion 18, which are respectively formed integral with one another. In the present embodiment, the taper angle of the gentle taper portion 16 is equal to that of the rod top portion 18. A top guide 20 is provided at the leading end portion of the rod pipe. According to the invention, alternatively, the steep taper portion 14 may be removably or fixedly jointed to the gentle taper portion 16. Reference character H designates water drain holes each of which is formed as an elongated hole long in the longitudinal direction of the rod pipe. The water drain holes enhance the water drain property to thereby maintain the durability of the rod pipe.

The upper side of the rear half section of the large diameter portion 12 is cut away in such a manner as shown in Figs. 1 and 2, thereby providing a cutaway portion 28. The reason why the cutaway portion 28 is provided is to lower a placement portion 42R for a reel 22 downwardly of the position of the surface of the large diameter portion 12 near to the axis of the rod pipe. In the portion of the large diameter portion 12 situated forwardly of the reel placement portion 42R, there is provided a fishline introduction guide 26. In this structure, since the placement portion for the reel 22 is lowered in position, the angle of inclination at which a fishline 24 is drawn out from the rod pipe can be decreased by an amount corresponding to the lowered distance of the reel placement portion 42R, so that the fishline 24 can be smoothly introduced into the rod pipe and the insertion resistance of the fishline can be reduced accordingly.

However, provision of the cutaway portion 28 in the rod pipe in turn lowers the strength of the rod pipe to a great extent, so that the rod pipe cannot endure operating as a casting rod. On the other hand, in the large diameter portion 12, there is still left a side surface portion 12A which is located on the opposite side to the cutaway portion 28. In the present embodiment, reinforcing means 42 is fixed integrally to the inner side of the side surface portion 12A in such a manner that it extends in the longitudinal direction of the rod pipe, while a handle portion 10 is fixed to the rear portion of the reinforcing means 42. Therefore, the rod pipe and handle portion 10 are strongly connected to each other. Also, since the handle portion 10 is situated in the extended portion of the rod pipe, that is, the handle portion 10 and the rod pipe are aligned on a line, there is eliminated the possibility that the casting rod can be operated unstably, so that the casting rod can be operated in a good condition.

Also, the reinforcing means 42 is structured so as to extend to the neighborhood of the front end of the large diameter portion 12, there is formed in the front portion of the thus extending reinforcing means a hole which is inclined in such a manner as shown in Fig. 2, and a pipe 26C included in the fishline introduction guide 26 is mounted into and fixed to the inclined hole. Due to this structure, the fishline 24 can be introduced into the rod pipe smoothly. Alternertively, the hole may not be formed in the reinforcing means, but may be formed directly in the portion of the rod pipe large diameter portion situated at the above-mentioned position. In this case as well, since the hole is not formed in the gentle taper portion 16, the strength of the rod pipe is not decreased so much and thus it can be reinforced easily as in the present embodiment.

A first guide ring 26A and a second guide ring 26B respectively formed of ceramics are mounted in the front and rear end portions of the pipe 26C, which reduces the insertion resistance of the fishline 24 at the position where the direction of the fishline 24 may change. Accordingly, the fishline 24 leaving the leading end portion 26B of the fishline introduction guide 26 comes to the neighborhood of the boundary area between the large diameter portion 12 and steep taper portion 14. However, the rod pipe has a large inside diameter in such area. Therefore, although there are still left in the fishline 24 some effects such as a lateral vibration and the like which are caused by the complicated operation of the casting rod when in use even after the fishline 24 leaves the fishline introduction guide 26, the fishline 24 is prevented from touching the inner surface of the rod pipe, which in turn prevents the insertion resistance of the fishline 24 from increasing. Also, since a guide ring G formed of ceramics is disposed in the boundary are between the steep taper portion 14 and gentle taper portion 16, the fishline 24 is prevented from coming into direct touch with the inner surface of the rod pipe in such boundary area.

Referring now to the structure of the upper surface of the reinforcing means 42, the reel placement portion 42R on which the reel leg 22A of the double bearing reel 22 can be placed is formed in a substantially plane surface, while the front portion 42S of the reel leg placement portion 42R is also formed in a substantially plane surface. Between the two plane surfaces 42S and 42R, there is interposed a fixing hood 36 such that it is located backwardly of the front end of a line guide 22L of a level wind mechanism disposed in the front portion of the double bearing reel 22, thereby preventing the fishline 24 from touching the fixing hood 36.

In the rear portion of the reel placement portion 42R, there is disposed a moving hood 34 in such a manner that the outer periphery of the rear portion of the moving hood 34 is in threaded engagement with a rotary nut 32, while the rotary nut 32 is held by a fixing plate 30 in such a manner that it is prevented from moving back and forth. Therefore, if the rotary nut 32 is rotated, then the moving hood 34 can be moved back and forth, so that the reel leg 22A can be fixed. Also, a trigger 38 is fixed integrally to the reinforcing means 42, while moving hood support member 40 united with the trigger 38 covers the moving hood 34 from outside. Due to this, even if the moving hood 34 is going to float up when the reel leg 22A is mounted, the existence of the support member 40 prevents such floating of the moving hood 34. The trigger 38 and support member 40 also form part of the reinforcing means as set forth in the scope of the patent claims. Also, a structure in which part of the reinforcing means extends externally of the rod pipe in this manner does not depart from the spirit and scope of the patent claims.

The reel leg placement portion 42R is not necessarily parallel to the axial direction of the rod pipe, but it may be inclined down forwardly or backwardly so that the angle of draw-out of the fishline 24 from the reel 22 can be adjusted, or, more conveniently, the inclination of the reel leg placement portion 42R may be adjusted.

Next, description will be given below in detail of the structural features of the double bearing reel 22 employed in the present embodiment. For reference, a conventional double bearing reel 22', which is generally shown in Fig. 4 (which will be discussed later), includes, as its drive transmission means, a drive gear G1 provided on the rotary shaft of a handle and a spool gear G3 which is provided on the shaft of a spool 22S in such a manner that it is meshable and rotatable with the drive gear G1.

On the other hand, in the present embodiment shown in Fig. 2, an idle gear G2 is interposed between the drive gear G1 and spool gear G3, whereby the rotation of a handle 22H can be transmitted to the spool gear G3 through the drive gear G1 and idle gear G2. Therefore, the direction of rotation of the last spool gear G3, that is, the direction of rotation of the spool 22S is the same as that of the handle 22H. In order words, if the handle is rotated, in a direction of an arrow shown in Fig. 2, then the fishline 24 can be taken up or played out from the lower side of the spool 22S. Due to this, when compared with the conventional structure, the introduction angle of the fishline 24 can be reduced accordingly, which in turn reduces the degree of directional change of the fishline 24 at the fishline introduction guide 26, thereby decreasing the fishline resistance. Also, the rotation in this arrow direction is a rotation in the take-up direction and, in general, such rotation is carried out with a force. This rotation can stabilize the fishing rod when compared with the reversed rotation. Therefore, when compared with a case in which the fishline inclination angle is reduced by use of the conventional reel 22' while the spool 22S is reversely rotated to take up the fishline from the lower side of the spool 22S, the reel structure employed in the present embodiment is preferable.

As described previously, since the upper surface 42S of the reinforcing means 42 is formed in a plane surface, this can be used as a finger placement surface when an angler is waiting for the fish biting at the lure while pinching the fishline 24 by fingers. For this reason, the distance between the fixing hood 36 and the entrance of the fishline introduction guide 26 is preferably in the range of 10 - 30 cm. Also, in view of the fact that the fishline 24 is pinched in the middle portion between them, the height of the fishline 24 in the pinching position is preferably in the range of 0.5 - 3 cm. Since the upper surface 42S of the reinforcing means is used as a finger placement surface, in order to prevent the fingers from aching, preferably, the upper surface 42S may be formed of soft material such as cork, foaming material, rubber or the like, or, may be coated with soft resin, transplanted hair, soft paint or the like. Also, because the fishline introduction portion 26 is mounted in the large diameter portion 12 and the exit portion 26B of the fishline introduction portion 26 is situated in the neighborhood of the boundary portion between the large diameter portion 12 and the steep taper portion 14 where the inside diameter of the rod pipe is still large, although there are still left on the fishline 24 some influences such as the lateral trembling of the fishline 24 and the like caused by the complicated movements of the casting rod produced when it is used, there is eliminated the possibility that the fishline 24 can touch the inner surface of the rod pipe due to the trembling motion of the fishline 24 to thereby increase the insertion resistance of the fishline 24.

Now, in the double bearing reel 22, the axis C1 of the handle shaft is set backwardly and downwardly of the axis C3 of the spool shaft. If the handle shaft axis C1 is lowered down to approach the position of the axis of the rod pipe in this manner, then the rotational operation of the handle can be stabilized. Also, if the handle shaft axis C1 is set backwardly in this manner, then the operation of the handle can be stabilized while the angler is gripping or palming the handle. Further, if the axes C1 and C3 are spaced from each other in this manner, then it is easy to produce spatial room for provision of the idle gear G2 between them.

Also, as shown clearly in Fig. 3, the double bearing reel 22 according to the present embodiment includes a handle 22H on the right side thereof, a right side cover 22B in which the above-mentioned gears G1, G2 and G3 are stored, and a left side cover 22C. The right side cover 22B is long backwardly, while the left side cover 22C is shorter by a distance L than the right side cover 22B. Therefore, when palming the handle 22H by the left hand, the palming operation is easy because the upper surface of the rear portion of the right side cover 22B on which the thumb of the left hand is placed is situated backwardly. Also, since the rear end of the left side cover 22C is shifted forwardly by the distance L, the left side cover 22C does not provide any obstacle to the movement of the thumb, which allows the palming operation to be performed smoothly. On the other hand, in a double bearing reel of another type that a handle is disposed on the left side thereof, contrary to the above embodiment, a left side cover may be formed longer than a right side cover.

Although the above-mentioned mechanism for transmission of the rotation of the handle 22H uses the three gears G1, G2 and G3 having the three axes, the rotation transmission can also be achieved by using an odd number of gears such as five gears seven gears or the like. However, if two or more gears rotating in the same manner are fixed onto a single axis, then the number of gears necessary is different. Although the above description has been given on the assumption that external gears are used, even if an internal gear and an external gear are combined together, they can also be rotated in the same direction. Also, if a toothed belt is employed in the transmission mechanism, then two toothed pulleys can be used to rotate the spool in the same direction as the direction of the handle rotation. Of course, instead of the toothed belt and pulley, ordinary belt and pulley may be combined together. Further, there can be used other various kinds of transmission mechanisms as well.

In a single bearing reel, the handle and spool are rotated in the same direction. If a plurality of gears are used as in the double bearing reel, the take-up speed and take-up force can be adjusted according to the gear ratios, which is convenient. However, the present invention is applicable irrespective of the kinds of the reels.

Next, in Fig. 4, there is shown a lure rod of an intra-line type according to another embodiment of the invention. The lure rod comprises a rod pipe which includes a gentle taper portion 16, a steep taper portion 14 and a large diameter portion 12. And, the upper side of the rear portion of the rod pipe is cut away to thereby provide a cutaway portion 28 into which the leg of a reel 22' can be mounted. The reason why the cutaway portion 28 is provided is to lower a reel placement portion 42 downwardly of the position of the surface of the large diameter portion 12 near to the axis of the pipe rod. There is formed hole in the portion of the large diameter 12 located forwardly of the reel placement portion 42R, and a fishline introduction guide 26 is inserted into and fixed to the hole in an inclined manner. The distance between the reel 22' and fishline introduction guide 26 is almost similar to the distance in the previous embodiment that has already been described, while the inclination angle of the fishline 24 varies greatly as the reel 22' is raised or lowered. For this reason, if the reel placement portion 42R is lowered in position, then the inclination angle of the fishline 24 drawn out from the fishline introduction guide 26 is decreased according to the lowered distance of the reel placement portion 42R, so that the fishline 24 can be introduced smoothly along the fishline introduction guide 26 into the rod pipe and thus the resistance of the fishline can be reduced. Also, the leading end 26B of the fishline introduction guide 26 is located so as to face the interior of the large diameter portion 12, which prevents the played-out fishline from touching the inner surface of the rod pipe even if the fishline is vibrating, thereby being able to reduce the fishline resistance when the fishline is played out.

In order to reinforce the lowered strength of the rod pipe due to provision of the cutaway portion 28, there is provided light, sturdy, pipe-shaped and straight reinforcing means 42 including matrix synthetic resin, which is reinforced with reinforcing fibers similarly to the rod pipe main body. The reinforcing means 42 is disposed such that it extends from a handle portion 10 provided in the rear end of the large diameter portion 12 to the interior of the large diameter portion 12. And, the reinforcing means 42 is fixed integrally to the inner surface of the large diameter portion 12 by front and rear fixing members 42A and 42B which are respectively formed of synthetic resin and are disposed in the front and rear portions of the reinforcing means 42. This makes the lure rod sturdy and the handle portion 10 is situated in the extended portion of the rod pipe, so that the lure rod can be operated reliably and stably.

A fixing mechanism for fixing the reel 22' is similar to that shown in Fig. 2. A fixing hood 36, a reel leg placement portion 42R, a trigger 38 and a moving hood support member 40 are all united together with the fixing member 42A. Further, in the fishline introduction guide 26 which is located forwardly of the fixing mechanism, a pipe 26C is inserted in an inclined manner into a hole formed in the large diameter portion 12 and is fixed to the fixing member 42B. Due to this, the fishline introduction guide portion of the rod pipe is also reinforced. However, since no other member but the pipe-shaped reinforcing means 42 is interposed between the two fixing members 42A and 42B, the rod pipe is reduced in weight. In order to further reduce the weight of the rod pipe, the thickness of the whole periphery of the rod pipe in the neighborhood of the fishline introduction guide 26 may be increased or the thicker portion is provided around the fishline introduction guide 26 to thereby eliminate the forwardly located fixing member 42B, and the pipe-shaped reinforcing means 42 may be extended up to the backwardly located fixing member 42A. In this case as well, since the reinforcing means 42 is united with the opposite side of the rod pipe to the cutaway portion 28 through the fixing member 42A, the rod pipe is sturdy.

In the front portion of the fixing member 42B, there is provided a plug member 42C which not only prevents invasion of waterdrops entering from front together with the fishline 24 but also drains the water from a water drain hole H' formed in the lower portion of the rod pipe. More specifically, since a large quantity of water is removed from the fishline 24 due to the sliding contact between the leading end 263 and the fishline 24 when the fishline 24 is wound up onto the reel 22', the water drain hole H' is located diametrically opposite to the leading end 26B of the fishline introduction guide 26. Thus, the removed water can be drained quickly out of the interior of the steep taper portion 14 and the large diameter portion 12 through the water drain hole H'. Further, a plug member 42C is disposed immediately behind the leading end 26B and the water drain hole H' so as to serve as a partition wall which divides the interior of the rod in a water-tight manner. According to this arrangement, the water removed from the fishline 24 never move beyond the plug member 42C backwardly of the rod, and thus the plug member 42C contributes to the quick discharge of water through the water drain hole H' and further the intra-line type rod is made free from the unpleasant noise and gravity center shift due to longitudinal motion of the water within the interior of the rod.

Further, since the water drain hole H' is provided in the lower portion of the large diameter portion 12, the expanded interior space owing to the steep tapered taper portion 14 and the large diameter portion 12 can receive water of a large quantity, thus even though the large quantity of water is removed from the fishline or flows into the interior of the fishing rod, the water can be surely discharged though the water drain hole H' without the flow of water forwardly.

Also, since the portion of the large diameter portion 12 of the rod pipe existing forwardly of the reel mounting portion is left almost as it is, this portion can be held easily during the fishing operation. Therefore, the surface of this portion may be covered with the above-mentioned soft material or the like.

The remaining portions of the present embodiment are similar in operation and structure to the embodiment shown in Fig. 2.

As can be clearly understood from the foregoing description, according to the invention, the fishline introduction guide is provided in an inclined manner, the fishline is introduced along the rod pipe, and the fishline introduction guide is provided in the large diameter portion or in the portion of the taper portion to the large diameter portion. Due to this, the fishline leaving the exit of the fishline introduction guide can come to the interior portion of the rod pipe large in diameter and thus can be prevented from touching the inner surface of the rod pipe even if it is still vibrating, which can reduce the resistance of the fishline as much as possible when it is played out. At the same time, since the fishline introduction guide is provided in the portion of the rod pipe large in diameter, the ill effects of the hole on the strength of the rod pipe are limited, so that a sturdy lure rod can be supplied.

Further, there can be supplied a lure rod which not only decreases the introduction angle of the fishline to thereby reduce the insertion resistance of the fishline but also is sturdy and can be operated well.

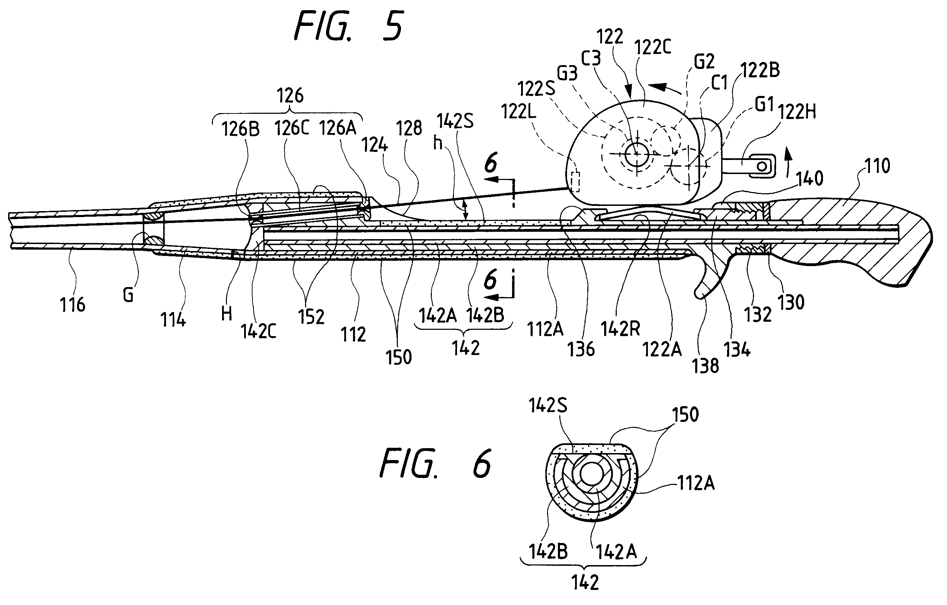

Fig. 5 is a side view of a casting rod of an intra-line type according to yet another embodiment of the invention, and Fig. 6 is a transverse section view taken along the arrow line 6-6 shown in Fig. 5. The rod pipe of the present casting rod uses synthetic resin as its matrix and is reinforced with reinforcing fibers. And, the rod pipe includes a large diameter portion 112, a steep taper portion 114, and a small diameter portion or a gentle taper portion 116, while a top guide is provided (not shown in Figs. 5 and 6) in the leading end of the rod pipe. Reference character H stands for a water drain hole which can enhance the water drain property to thereby maintain the durability of the rod pipe.

The upper side of the rear half section of the large diameter portion 112 is cut away in such a manner as shown in the drawings, thereby providing a cutaway portion 128. The reason for provision of the cutaway portion 128 is to lower a placement portion 142R for a reel 122 from the position of the surface of the large diameter portion 112 down to the axis of the rod pipe. A fishline introduction portion 126 is provided in the portion of the large diameter portion 112 situated forwardly of the reel placement portion 142R and, if the placement portion 142R for the reel 122 is lowered down, then an angle of inclination at which a fishline 124 is drawn out is made smaller by an amount corresponding to the lowered distance of the reel placement portion 142R, so that the fishline 124 can be introduced into the rod pipe smoothly and the resistance of the fishline 124 can be reduced.

However, the above cutaway of the rod pipe reduces the strength thereof to such a great extent that the rod pipe cannot endure operating as a casting rod. For this reason, a reinforcing pipe 142A formed of fiber reinforced synthetic resin is provided so as to extend in the longitudinal direction of the rod pipe, while a handle portion 110 is fixed to the rear portion of the reinforcing pipe 142A. An auxiliary member 142B is integrally fixed between the reinforcing pipe 142A and the inner surface of a residual rod pipe portion 112A of the large diameter portion situated on the opposite side to the cutaway portion 128. Due to this, the rod pipe and handle portion 110 are strongly connected to each other. Also, since the handle portion 110 is situated at the extended portion of the rod pipe, there is no possibility that the handle portion 110 can make the operation of the fishing rod unstable and thus the fishing rod can be operated quite well.

Also, reinforcing means consisting of the reinforcing pipe 142A and auxiliary member 142B is extended near to the front end of the large diameter portion 112, while there is formed in the front portion of the auxiliary member 142B a hole inclined to such an extent as shown in the drawings and a pipe 126C included in the fishline introduction portion 126 is inserted into and fixed to the hole. This allows the fishline 124 to be introduced smoothly into the rod pipe. And, first and second guide rings 126A and 126B are mounted respectively in the front and rear ends of the pipe 126C and a guide ring G formed of ceramics is disposed in the boundary area between the steep and gentle taper portions 114 and 116 that is situated forwardly of the first and second guide rings 126A and 126B, thereby preventing the fishing 124 from coming into direct touch with the inner surface of the rod pipe.

Referring now to the shape of the upper surface of the reinforcing means 142, the placement portion 142R for placing thereon the reel leg 122A of the double bearing reel 122 is formed in a substantially plane surface, while a front portion 142S of the reinforcing means 142 located forwardly of the reel placement portion 142R is also formed in a substantially plane surface. Between the two place surface portions 142S and 142R, there is formed a fixing hood 136. The fixing hood 136 is located backwardly of the front end of a line guide 122L of a level wind mechanism provided in the front portion of the double bearing reel 122, in order that the fishline 124 is prevented from touching the fixing hood 136. Also, the front portion of the fixing hood 136 is formed lower than the remaining portion thereof, which makes it difficult for the fishline 124 to touch it. In the present embodiment, the fixing hood 136 is formed so as to continue with the plane surface portion 142S but, however, when the fixing hood 136 is formed so as to continue with a round rod pipe, it is preferable that the fixing hood is formed into such a tapered shape that the outer circumference of the fixing hood is gradually matched with the outer circumference of the rod pipe, to thereby prevent the fishline from touching the fixing hood.

In the rear portion of the reel placement portion 142R, there is provided a moving hood 134 including a rear portion the outer periphery of which is in threaded engagement with a rotary nut 132, while the rotary nut 132 is held by a fixing plate 130 in such a manner that it is prevented from moving back and forth. Therefore, if the rotary nut 132 is rotated, then the moving hood 134 is moved back and forth so that the reel leg 122A can be fixed. Also, a trigger 138 is integrally fixed to the auxiliary member 142B, and a moving hood support member 140, which is united together with the trigger 148, covers the moving hood 134 from outside. That is, even if the moving hood 134 is going to float up when the reel leg 122A is mounted, the existence of the support member 140 prevents the moving hood 134 from floating up.

The reel placement portion 142R must not be always parallel to the axial direction of the rod pipe, but may be inclined such that it becomes lower in the front portion or in the rear portion, thereby being able to adjust an angle at which the fishline 124 is drawn out from the reel 122. Alternatively, it is further convenient to structure the reel placement portion 142R such that the inclination thereof can be adjusted.

As described above, the large diameter portion 112 includes the cutaway portion 128, the upper surface 142S of the reinforcing means 142 is formed in a plane surface, and this plane surface portion is formed thin in the vertical thickness thereof. In this structure, it is easy and natural to hold the fishing rod in such a manner that the middle finger, third finger and little finger are applied to the lower side of the residual rod pipe portion 112A of the large diameter portion 112 while the forefinger is applied to the plane surface portion 142S, leaving the thumb free. In this state, while pinching the fishline with the forefinger and the free thumb, the angler senses a strike, checks the states of the fishline and terminal tackles, and performs a simple fishline operation. In this case, the angler operates the fishing rod while holding not only the fishing rod but also the reel with the whole hand including the palm thereof. Therefore, if the rod pipe surfaces are formed hard or remain in the plane surfaces, the fingers ache, which lowers the operationability of the fishing rod.

In view of the above, in the present embodiment, these surfaces are covered with flexible members 150, respectively. For example, as the flexible members 150, there are available cork, foam material, rubber, soft resin, expandable and contractible tube, transplanted hair, flexible paint coating and the like. For the above-mentioned finger operation, the distance between the fixing hood 136 and the entrance of the fishline introduction portion 126 is preferably in the range of 10 to 30 cm, while the fishline is pinched with fingers in the middle portion of such distance. Also, if the height of such middle portion is set in the range of 0.5 to 3 cm, then the fishline is prevented from touching the plane surface portion 142S and also the fishline can be easily pinched with fingers.

In order that the play-out and take-up positions of the fishline 124 can be set in the above-mentioned low positions, it is preferable to employ such a double bearing reel 122 as has the following structure. An idle gear G2 is interposed between a drive gear G1 and a spool gear G3, while the rotation of a handle 122H is transmitted to the spool gear G3 through the drive gear G1 and idle gear G2. Therefore, the rotational direction of the last spool gear G3, that is, the rotational direction of the spool 122S is the same as the rotational direction of the handle 122H. That is, if the handle 122H is rotated in a direction of an arrow in Fig. 5, then the fishline 124 is taken up around the spool 1228 from the lower side thereof, while it is also played out from the lower side of the spool 122S. Accordingly, when compared with a reel having a conventional structure, the introduction angle of the fishline 124 can be made smaller, the degree of curving of the fishline 124 in the fishline introduction portion 126 can be reduced, and the resistance of the fishline 124 can also be decreased. Also, the rotation in the above arrow direction is a rotation in the take-up direction and the take-up direction rotation is executed with a force. In the take-up direction rotation, the fishing rod can be operated stably when compared with the reverse direction rotation. Therefore, the reel structure according to the present embodiment is preferable when compared with a structure in which the conventional double bearing reel is rotated in the reverse direction and the fishline is taken up around the spool from the lower side thereof, thereby reducing the inclination angle of the fishline.

In the double bearing reel 122, the axis C1 of the handle shaft is set backwardly and downwardly of the axis C1 of the spool shaft. If the handle shaft axis C1 is lowered to approach the position of the axis of the rod pipe in this manner, then the handle rotational operation can be stabilized. Also, if the handle shaft axis C1 is set backwardly in this manner, then the handle operation can be stabilized while the handle is being gripped or palmed. Further, by setting the axes C1 and C3 spaced apart from each other in this manner, it is easy to produce spatial room for provision of the idle gear G2.

Also, in the double bearing reel 122 according to the present embodiment, the handle 122H is disposed on the right side of the reel 122. The reel 122 further includes a right side cover 122B, in which the above-mentioned gears G1, G2 and G3 are stored, and a left side cover 122C. The right side cover 122B is long backwardly, while the left side cover 122C is shorter than the right side cover 122B. Therefore, when palming the handle 122H by the left hand, the thumb of the left hand can be easily placed on the upper surface of the rear end of the right side cover 122B. Also, since the rear end of the left side cover 122C is located forwardly, the left side cover 122C does not interfere with the movement of the thumb but the palming operation can be performed smoothly. On the other hand, in a reel of a type that a handle is disposed on the left side thereof, a left side cover is formed longer than a right side cover.

In the above-mentioned transmission mechanism for transmitting the rotation of the handle 122H, there are used the three gears G1, G2 and G3 having the three axes. However, this is not limitative but an odd number of gears, such as five gears, seven gears and the like can also be used for this purpose. Also, if two or more gears rotating in the same way are fixed to the same axis, the number of gears necessary is different. In the present embodiment, it is assumed that the gears used are external gears, but even if an internal gear is combined with an external gear, they can also be rotated in the same direction. And, in a transmission mechanism which uses a toothed belt, if two toothed pulleys corresponding to the toothed belt are used, then the spool can be rotated in the same direction as the that of the handle rotation. Of course, instead of the toothed belt and pulleys, normal belt and pulleys can also be combined for this purpose. Further, there are available other various kinds of transmission mechanisms.

In a single bearing reel, the direction of the handle rotation is the same as that of the spool rotation but, however, as in a double bearing reel, if two or more gears are used, then the winding speed and force can be adjusted according to the gear ratios, which is convenient for operation of the fishing rod. However, it should be noted here that the present invention is applicable irrespective of the kinds of reels.

When the casting rod is used, there are still left on the fishline 124 some effects such as a lateral vibration and the like which are caused by the complicated movements of the casting rod, even after the fishline 124 comes out from the fishline introduction portion 126. However, since the fishline introduction portion 126 is mounted in the large diameter portion and the exit portion 126B of the fishline introduction portion 126 is situated adjacent to the boundary area between the steep taper portion 114 and the large diameter portion 112 that is still large in inside diameter, the fishline 124 is prevented from touching the inner surface of the rod pipe in spite of the remaining vibrations thereof and thus the fishline 124 is thereby prevented from increasing the resistance thereof. For this purpose, the inside diameter of the large diameter portion may be preferably at least two times that of the gentle taper portion 116.

The surface of the large diameter portion 112 and the surface of the steep taper portion 114, which are respectively situated forwardly of the entrance portion 126A of the fishline introduction portion 126, are covered with flexible members 152 similar to the previously mentioned flexible members 150, so that these surfaces are formed as gripping portions. As the gripping portions, it is preferable that these surface portions may have an outside diameter of 16 mm or more. Also, if they are located at a distance of 60 cm or less from the rear end of the fishing rod, then it is easy to hold them by the front hand. Alternatively, the above surface portions may be covered with skidproof members instead of or together with the flexible members 152. For example, a large number of projections and uneven portions may be formed in the surface portions, or the surface portions may be painted or printed together with skidproof particles, or they may be coated with expandable and contractible paint. Also, these processings may be performed only on the lower surfaces or side surfaces of the surface portions. When performing the pumping operation and the like, if the angler holds the peripheral surface of the rod pipe situated adjacent to the fishline introduction portion where the fishline 124 does not touch the hand, then the pumping operation and the like can be performed easily. In the present embodiment, since such surface portions are covered with the flexible members or skidproof members, the sense of the holding of the surface portions is good and thus the operationability of the fishing rod is improved. Also, in the present embodiment, since the steep taper portion 114 forms the front portion of the fishline introduction portion 126, the front portion widens backwardly, so that the hand holding the front portion is difficult to slip.

If hard resin, fiber reinforced synthetic resin or the like is applied to the rod pipe portion situated adjacent to the fishline introduction portion to thereby increase the thickness of the same portion larger than that of the rod pipe main body, so that the transverse section thereof extending along the circumferential direction of the rod pipe can be set in a non-circular shape which is easy to hold, such as a substantially elliptic shape long in the vertical direction, a substantially inverted triangular shape, or the like, then the same portion can easily match the palm in the pumping operation, and thus the fishing rod can be operated stably as well as can be improved in operationability.

In Fig. 5 reference character 142C designates a plug member which is used to prevent waterdrops entering through the fishline 124 from invading into the rod pipe as well as to drop the waterdrops down from the water drain hole H. This can improve the rod pipe in water resistance.

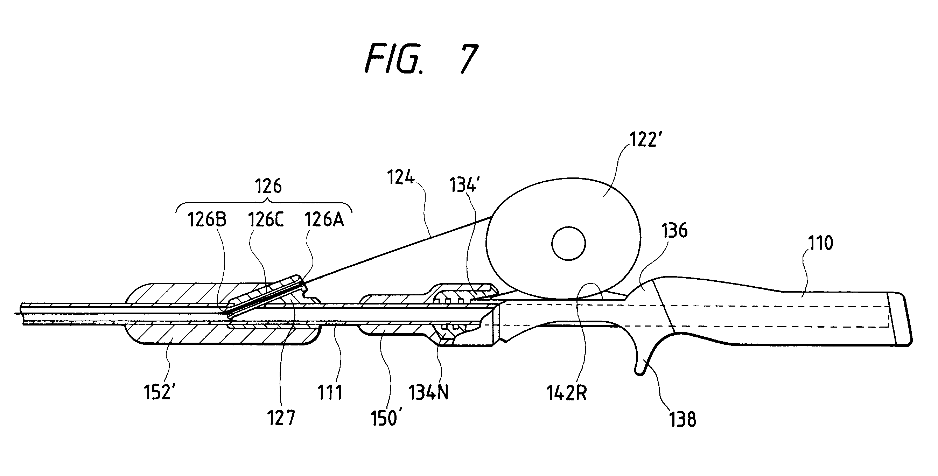

Next, in Fig. 7, there is shown a casting rod of an intra-line type according to still another embodiment of the invention. In the present embodiment, a handle portion 110 is fixed to the rear portion of a rod pipe 11 having a small diameter. The front portion of the handle portion 110 includes a trigger 138 in the bottom portion thereof and a reel placement portion 142R on the top surface thereof. Since the handle portion 110 is situated in the extended portion of the rod pipe, the operationability of the fishing rod is good. A fixing hood 136 is disposed in the rear of the reel placement portion 142R, while a nut member 134N including a moving hood 134' is disposed in front of the reel placement portion 42R. The nut member 134N is used to fasten and fix the leg of a reel 122'.

The nut member 134N is covered with flexible members and is extended to thereby form the front portion thereof as a small diameter portion 150'. Therefore, when operating the fishing rod in such a manner that the small diameter portion 150' is held between fingers, and that the fishline 124 drawn out from the reel 122' is pinched between the thumb and forefinger, the fingers are prevented from aching and thus the fishing rod is improved in operationability. The flexible members used in the present embodiment are the same as those previously described.

A fishline introduction portion 126 is provided in front of the reel placement portion 142R and includes a pipe 126C which is inserted in an inclined manner into a hole formed in the rod pipe 111. To reinforce this, there is provided a support portion 127 which is formed of synthetic resin. The periphery of the portion of the rod pipe situated adjacent to the fishline introduction portion 126 is slender and, therefore, it is not suitable as a gripping portion. In view of this, this portion is covered with the previously described flexible member or skidproof member in such a manner that the fishline introduction portion 126 is also covered with the same member, thereby providing a gripping portion 152' which has an outside diameter at least two times that of the rod pipe 111, that is, 16 mm or more. Since the gripping portion 152' is situated forwardly of the handle portion 110, it may be preferably formed of light material which is smaller in specific gravity than the rod pipe 111, so that the angler does not feel it heavy but can perform the fishing rod easily. For example, there can be used cork, foam material, a hollow member having an outer frame structure in which a support member is provided in the radial direction thereof, or the like. Even when the angler holds this gripping portion 152', the angler's hand does not touch the fishline.

Also, if the gripping portion 152' is disposed at a distance of 60 cm or less from the rear end of the fishing rod, then it is easy to hold by the front hand. Similarly to the previously embodiment, preferably, the gripping portion 152' may be structured such that the cross section thereof is a substantially elliptic shape long in the vertical direction or in a substantially inverted triangular shape. Further, in Fig. 7, the longitudinal section shape of the gripping portion 152' is constant in width. However, a shape which is short in the longitudinal direction and is high in the central portion thereof, such as an elliptic shape or the like, is preferred to the constant-width shape, because it can be held more stably.

Alternatively, the shape of the support portion 127 of synthetic resin for reinforcing the fishline introduction portion 126 may be changed and the lower side thereof may also be thickened to thereby provide an elliptic shape long in the vertical direction or an inverted triangular shape. However, in view of the weight reduction of the gripping portion, it is preferably formed of the above-mentioned flexible member such as cork, foam material and the like.

As can be seen clearly from the foregoing description, according to the invention, there can be provided a fishing rod of an intra-line type which can be held well by hand or with fingers and thus can be improved in operationability.

## Claims

1. An intra-line type lure rod, wherein a handle portion is connected to a backwardly extended portion of a rod pipe including a small diameter portion, a large diameter portion having a reel mounting portion, and a taper portion integral with said large diameter portion while the front portion of said taper portion is connected to said small diameter portion, and there is formed a fishline introduction guide means in the portion of said large diameter portion located forwardly of said reel mounting portion or in the portion of said taper portion close to said large diameter portion.

2. A lure rod with an inserted fishline as set forth in Claim 1, wherein said fishline introduction guide means includes a fishline guide pipe inclined with respect to an axis of said rod pipe.

3. An intra-line type lure rod, wherein a handle portion is connected to an extended portion of a rod pipe, a cutaway portion is formed on one side of the side surface of said rod pipe, a reinforcing means for reinforcing the lowered strength of said rod tube due to provision of said cutaway portion is provided such that it extends from the interior of said handle portion through the interior of said rod tube to said cutaway portion, a reel placement portion is provided at a position of said reinforcing means opposed to said cutaway portion, and a fishline introduction portion is provided in front of said reel placement portion.

4. An intra-line type fishing rod, wherein a thickness portion is formed in a portion of a rod pipe situated between a reel placement portion and a fishline introduction portion provided forwardly of said reel placement portion, said thickness portion has a vertical thickness capable of being loosely held between fingers, and a flexible member is placed on the surface of said thickness portion.

5. An intra-line type fishing rod, wherein a flexible member or a skidproof member is placed on a peripheral surface of a portion of said rod pipe situated adjacent to a fishline introduction portion.

6. An intra-line type fishing rod, wherein a cross section of a portion of a rod pipe situated adjacent to a fishline introduction portion is formed into a non-circular shape long in the vertical direction thereof.

7. An intra-line type fishing rod comprising:
a hollow rod pipe;
a fishline introduction guide for introducing a fishline from a reel into an interior of said hollow rod pipe, said fishline introduction guide having an and portion contacting with said fishline when said fishline is wound up to said reel;
a water drain hole formed through said rod pipe and located diametrically opposite to said end portion; and
a partition plug means located within said hollow rod pipe and immediately behind said end portion and said water drain hole for water-sealingly closing said interior of said hollow rod.

8. An intra-line type fishing rod according to claim 7, wherein said hollow rod pipe has a large diameter portion and a small diameter portion located forwardly of said large diameter portion, and said partition plug means is located on said large diameter portion.

9. An intra-line type fishing rod according to claim 8, wherein a fishline guide ring is provided on said small diameter portion so as to protrude radially inwardly from an inner circumferential surface of said small diameter portion.

10. A combination of an intra-line type fishing rod and a reel mounted thereto, said fishing rod having front and rear mounting hoods for capturing leg of said reel therebetween, and a fishline introduction guide for introducing a fishline from said reel to an interior of said fishing rod, said fishline introduction guide having a rear end, wherein a longitudinal distance between said front mounting hood and said rear end of said fishline introduction guide is set substantially within a range of 10-30 cm, and a height of said fishline extending between said reel and said fishline introduction guide from an outer surface of said fishing rod at a longitudinal center between said front mounting hood and said rear end is set substantially within a range of 0.5-3.0 cm.
